# EUROPÄISCHE PATENTSCHRIFT

(11) **EP 0 755 953 B1**
(45) Veröffentlichungstag und Bekanntmachung des Hinweises auf die Patenterteilung: **07.06.2000**
(21) Anmeldenummer: 96111160.6
(22) Anmeldetag: 11.07.1996
(51) Int. Cl.: C08F 283/06, C08G 18/63

(54) **Niedrigviskose Polymerpolyole, ein Verfahren zu ihrer Herstellung sowie ihre Verwendung zur Herstellung von Polyurethanschaumstoffen**
Low viscosity polymer polyols, process for their preparation and their use in the preparation of polyurethane foams
Polymères polyols à faible viscosité, un procédé pour leur production ainsi que leur utilisation dans la préparation de mousses de polyuréthane

(30) Priorität: 24.07.1995 DE 19526921
(43) Veröffentlichungstag der Anmeldung: 29.01.1997
(73) Patentinhaber: BAYER AG, 51368 Leverkusen (DE)
(72) Erfinder: Heinemann, Torsten, Dr., 51065 Köln (DE); Scholl, Hans-Joachim, Dr., 51061 Köln (DE); Dietrich, Manfred, Dr., 51373 Leverkusen (DE); Jacobs, Gundolf, Dr., 51503 Rösrath (DE); Kratz, Mark, Dr., League City, TX 77573 (US); Sanders, Josef, Dr., 51373 Leverkusen (DE); Woynar, Helmut, Dr., 41540 Dormagen (DE)

(56) Entgegenhaltungen:
- EP-A- 0 699 693
- US-A- 4 568 705
- US-A- 4 603 188
- US-A- 4 661 531

## Beschreibung

Die vorliegende Erfindung betrifft die Herstellung von Polymerpolyolen niedriger Viskosität sowie deren Verwendung bei der Herstellung von Polyurethanschaumstoffen.

Unter Polymerpolyolen werden Produkte verstanden, die durch Polymerisation olefinischer Monomere mit Polyetherpolyolen ("Basispolyole") erhalten werden können. Als olefinische Monomere werden dabei hauptsächlich ethylenisch ungesättigte Verbindungen wie z.B. Styrol oder Acrylnitril eingesetzt.

Polymerpolyole werden bei der Herstellung von Polyurethan-Weichschaumstoffen eingesetzt.

Die Herstellung von Polymerpolyolen ist beispielsweise in den US-Patentschriften 3 383 351 und 3 304 273 oder in der DE-A 1 152 536 und DE-A 1 152 537 beschrieben.

Die Polymerpolyole sind im Idealfall verhältnismäßig niedrigviskose, feinteilige, nichtsedimentierende Dispersionen des Polymerisats (vorzugsweise eines Acrylnitril/Styrol-Pfropfcopolymeren) in dem im wesentlichen unveränderten Polyetherpolyol. Kennzeichnende Merkmale für Qualität und Verarbeitbarkeit der Polymerpolyole sind Viskosität, Lagerstabilität (Sedimentationsbeständigkeit) und Feinteiligkeit. Diese Eigenschaften werden vor allem durch Art und Mengenverhältnisse der Ausgangsstoffe beeinflußt. Insbesondere der Feststoffgehalt (Monomeranteil im Ansatz) und das Monomerverhältnis (z.B. Styrol/Acrylnitrilverhältnis) haben großen Einfluß auf die Produktqualität.

Die wichtigsten Ziele bei der Herstellung von Polymerpolyolen sind das Erreichen hoher Feststoffgehalte (mindestens 40 %) bei möglichst niedriger Viskosität und gleichzeitig ausgezeichneter Produktstabilität. Um die Produktstabilität, d.h. die Unterbindung der Bildung unerwünschter, aus der kontinuierlichen Phase, dem Basispolyol, ausfallender, agglomerierter Polymerpartikel zu erreichen, müssen die Polymerteilchen während der Polymerpolyolherstellung stabilisiert werden. Diese Stabilisierung kann durch den Einbau eines Teils der Moleküle des Basispolyethers in das in situ gebildete Polymere bewirkt werden. Hierbei wird die Effektivität der Stabilisierung beispielsweise durch ein möglichst hohes Molgewicht des Basispolyethers und durch einen möglichst hohen Acrylnitrilanteil im Monomergemisch begünstigt. Während ein hoher Acrylnitrilgehalt die Eigenfarbe der Polymerpolyole und die Verfärbungstendenz damit hergestellter Weichschäume erhöht und damit unerwünscht ist, wird die Viskosität der Polymerpolyole durch den Einsatz von Basispolyolen mit höherem Molekulargewicht erhöht.

Eine weitere Möglichkeit zur Stabilisierung von Polymerpolyolen nach dem Stand der Technik ist die Mitverwendung von mit der Polyolphase kompatiblen Verbindungen, die ethylenisch ungesättigte, polymerisationsfähige Gruppen enthalten. Diese sogenannten Makromonomeren copolymerisieren mit den Vinylmonomeren, so daß die entstehenden Polymerteilchen durch Polyetherseitenketten sterisch stabilisiert werden und somit gegen Agglomeration und Sedimentation geschützt sind.

Die Herstellung von Polymerpolyolen unter Mitverwendung von Makromonomeren ist beschrieben z.B. in US-PS 3 652 639, US-PS 3 823 201, US-PS 4 460 715, US-PS 4 390 645, US-PS 5 093 412, US-PS 4 342 840. Die ethylenisch ungesättigten Doppelbindungen werden in Polyetherpolyole beispielsweise eingeführt durch Umsetzung mit cyclischen, ungesättigten Carbonsäureanhydriden wie Maleinsäureanhydrid und nachfolgende Umsetzung mit Ethylen- oder Propylenoxid; durch Veresterung mit Acryl- bzw. Methacrylsäure(derivaten); durch Umsetzung mit Allylglycidylether; durch Umsetzung m it einem ungesättigten Isocyanat wie z.B. Isocyanatoalkyl-acrylat und -methacrylat, 1-(1-Isocyanato-1-methylethyl)-3-(1-methylethenyl)-benzol oder NCO-funktionellen Addukten aus einem Polyisocyanat und Hydroxyethyl- bzw. Hydroxypropylacrylat.

Es besteht weiterhin Bedarf nach Polymerpolyolen die bei möglichst hohen Feststoffgehalt eine niedrige Viskosität besitzen.

Es wurde nun gefunden, daß niedrigviskose stabile Polymerpolyole erhalten werden können, wenn man bei deren Herstellung mit Rizinusöl modifizierte Hydroxyverbindungen einsetzt.

Gegenstand der Erfindung ist daher ein Verfahren zur Herstellung stabiler Pfropfcopolymer-Dispersionen durch radikalische Polymerisation von olefinischen Monomeren mit Polyolen, wobei die Polymerisation in Gegenwart einer mit Rizinusöl modifizierten Hydroxyverbindung durchgeführt wird.

Üblicherweise werden dabei die olefinischen Monomere in einer Menge von 20 bis 65 Gew.-%, bezogen auf das Endprodukt, eingesetzt.

Gegebenenfalls kann die Polymerisation in Gegenwart eines niedermolekularen Reglers sowie gegebenenfalls in einem organischen Lösungsmittel durchgeführt werden.

Erfindungsgemäß ist bevorzugt, daß
- als olefinische Monomere ethylenisch ungesättigte Monomere, insbesondere Styrol und/oder Acrylnitril verwendet werden,
- als ethylenisch ungesättigte Monomere Mischungen aus Styrol und Acrylnitril im Gewichtsverhältnis von 20:80 bis 80:20, vorzugsweise von 25:75 bis 75:25 verwendet werden,
- als Basispolyol ein mindestens zwei Hydroxylgruppen aufweisendes Polyol, insbesondere Polyetherpolyol mit einer Funktionalität von 2,5 bis 6 und einer OH-Zahl von 20 bis 100 verwendet wird,
- die mit Rizinusöl modifizierten Hydroxyverbindungen Molmassen von 6000 bis 100 000 g/mol und eine Funktionalität von 2 bis 6 aufweisen,
- als modifizierte Polyole Umsetzungsprodukte eingesetzt werden, bei deren Herstellung Rizinusöl und Hydroxyverbindungen im Molverhältnis von 1,1:1 bis 10:1 (Rizinusöl:Hydroxyverbindung), insbesondere 1,1:1 bis 3:1 vorgelegen hat.

Die als "Basispolyole" verwendeten mindestens zwei Hydroxylgruppen aufweisenden Polyole sind besonders bevorzugt Polyetherpolyole, z.B. die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als "Basispolyol" verwendeten Polyetherpolyole sollten Funktionalitäten von 2,5 bis 6 und eine OH-Zahl von 20 bis 100 besitzen. Die Polyetherketten sind aus Propylenoxid- und Ethylenoxideinheiten aufgebaut. Als "Basispolyole" kommen aber auch grundsätzlich Polyesterpolyole mit Funktionalitäten von vorzugsweise 2,5 bis 6 und einer OH-Zahl 20 bis 100 in Frage.

Die Polymerpolyole werden durch radikalische Polymerisation olefinisch ungesättigter Monomerer oder Mischungen olefinisch ungesättigter Monomere in den beschriebenen Polyetherpolyolen erhalten. Beispiele für derartige Monomere sind Butadien, Styrol, α-Methylstyrol, Methylstyrol, Ethylstyrol, Acrylnitril, Methacrylnitril, Methylmethacrylat, Acrylsäureester. Bevorzugt werden Styrol und Acrylnitril verwendet. Die Menge an olefinisch ungesättigten Monomeren beträgt 20 bis 65 Gew.-%, bezogen auf die Gesamtmenge an fertigem Produkt. Bei der Verwendung von Styrol und Acrylnitril ist das Verhältnis dieser beiden Monomeren vorzugsweise 20:80 bis 80:20, insbesondere 70:30 bis 30:70 Gewichtsteile.

Die Initiierung der radikalischen Polymerisation erfolgt mit üblichen radikalbildenden Initiatoren. Beispiele für derartige Initiatoren sind organische Peroxide wie Benzoylperoxid, tert.-Butyloctoat, Didesanoylperoxid; Azoverbindungen wie Azoisobutyronitril oder 2,2'-Azobis(2-methylbutyronitril).

Die mit Rizinusöl modifizierten Hydroxyverbindungen sind vorzugsweise ebenfalls Polyole, insbesondere Polyetherpolyole wie die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die Polyetherketten sind bevorzugt aus Propylenoxid- und Ethylenoxideinheiten aufgebaut. Die Funktionalitäten der mit Rizinusöl modifizierten Hydroxyverbindungen sollten zwischen 2 und 6, die Molmassen zwischen 6000 und 100 000 g/mol, vorzugsweise zwischen 6000 und 15 000 g/mol liegen. Als besonders wirksam haben sich dabei modifizierte Hydroxyverbindungen erwiesen, bei deren Herstellung das Rizinusöl gegenüber dem eingesetzten Polyetherpolyol im molaren Überschuß, insbesondere in einem Überschuß von 1,1:1 bis 10:1, besonders bevorzugt 1,1:1 bis 3:1, vorgelegen hat.

Als gegebenenfalls zuzusetzende niedermolekulare Regler werden insbesondere Alkohole wie Methanol, Ethanol, Isopropanol, Butanole, Butandiol, Mercaptane, Allylverbindungen, Enolether wie (Cyclohex-3-enylidenmethoxymethyl)benzol verwendet.

Als gegebenenfalls einzusetzende Lösungsmittel können Kohlenwasserstoffe wie Toluol, Ethylbenzol, Isopropylbenzol, Xylole oder Ketone wie Aceton, Methylethylketon verwendet werden; bevorzugt werden Toluol und Ethylbenzol verwendet.

Die Durchführung des erfindungsgemäßen Verfahrens kann diskontinuierlich oder kontinuierlich erfolgen. Man kann z.B. eine Mischung, die die ethylenisch ungesättigten Monomeren, den Initiator, gegebenenfalls Lösungsmittel und gegebenenfalls einen Teil des einzusetzenden Polyethers enthält, in den mit einem Rührwerk ausgestatteten Reaktor eindosieren, der den vorerhitzten Polyether, die mit Rizinusöl modifizierte Hydroxyverbindung und gegebenenfalls den Regler enthält. Es besteht aber auch die Möglichkeit, den Regler und einen Teil der mit Rizinusöl modifizierten Hydroxyverbindung zuzudosieren.

Außerdem kann eine Mischung aller Reaktionsteilnehmer kontinuierlich in einen Reaktor eindosiert und das Produkt in gleichem Maße durch einen Überlauf entnommen werden.

Die Temperatur, bei der die Polymerisation durchgeführt wird, beträgt in der Regel 80 bis 140°C, vorzugsweise 90 bis 130°C.

Nach Beendigung der Polymerisationsreaktion wird das Produkt in üblicher Weise durch Vakuumdestillation von leichtflüchtigen Anteilen wie Restmonomeren, Lösungsmittel und Reglerresten befreit.

Die nach dem erfindungsgemäßen Verfahren hergestellten Polymerpolyole sind hervorragend zur Herstellung von Polyurethankunststoffen nach dem Isocyanat-Polyadditionsverfahren geeignet. Sie sind frei von Polymeragglomeraten jeglicher Art, stabil und niedrigviskos.

Ein weiterer Gegenstand der Erfindung ist ein Verfahren zur Herstellung der mit Rizinusöl modifizierten Hydroxyverbindungen. Diese können z.B. durch Umsetzung der bereits genannten Polyetherpolyole mit Rizinusöl im Molverhältnis von 0,1:1 bis 10:1 gewonnen werden. Besonders bevorzugt setzt man das Rizinusöl im Überschuß ein, da dann in überraschender Weise besonders wirksame modifzierte Hydroxyverbindungen erhalten werden. Hierbei sollte das Molverhältnis Rizinusöl:Hydroxyverbindung bei 1,1:1 bis 10:1, bevorzugt 1,1:1 bis 3:1, liegen. Die Temperatur sollte bei 100 bis 280°C, vorzugsweise 150 bis 250°C liegen. Zur Beschleunigung der Reaktion können Katalysatoren wie Ca(OH)₂, Dibutylzinndilaurat, Zinndichlorid oder Titantetrabutylat zugesetzt werden. Um gegebenenfalls höhere Molekulargewichte der modifizierten Hydroxyverbindungen einzustellen, können mindestens difunktionelle Carbonsäuren oder Carbonsäurederivate während der Modifizierungsreaktion zugesetzt werden. Hierbei werden Molmassen von 7000 bis 100 000 g/mol eingestellt.

Die Erfindung betrifft weiterhin auch stabile, niedrigviskose Pfropfcopolymer-Dispersionen, erhältlich nach dem erfindungsgemäßen Verfahren und die Verwendung der erfindungsgemäß erhältlichen Pfropfcopolymer-Dispersionen als Polyolkomponente bei der Herstellung von Polyurethankunststoffen nach dem Isocyanat-Polyadditionsverfahren.

Die Herstellung von Polyurethankunststoffen, vorzugsweise von weichen, flexiblen Polyurethanschäumen erfolgt durch Umsetzung von
a) organischen Polyisocyanaten mit
b) den erfindungsgemäßen Polymerpolyolen, gegebenenfalls in Gegenwart von
c) weiteren höhermolekularen und/oder niedermolekularen, gegenüber Isocyanaten reaktive Wasserstoffatome enthaltende Verbindungen,
d) Katalysatoren,
e) Wasser und/oder niedrigsiedenden Kohlenwasserstoffen als Treibmittel und
f) Hilfsmitteln und/oder Zusatzstoffen.

Als Ausgangskomponenten werden verwendet:
a) aliphatische, cycloaliphatische, araliphatische, aromatische und heterocyclische Polyisocyanate, wie sie z.B. von W. Siefgen in Justus Liebigs Annalen der Chemie, 362, Seiten 75 bis 136 beschrieben werden, beispielsweise solche der allgemeinen Formel

   Q(NCO)ₙ,

   in der
   - n: 2 bis 5, vorzugsweise 2 bis 3, und
   - Q: einen aliphatischen Kohlenwasserstoffrest mit 2 bis 18, vorzugsweise 6 bis 10 Kohlenstoffatomen, einen cycloaliphatischen Kohlenwasserstoffrest mit 4 bis 15, vorzugsweise 5 bis 10 Kohlenstoffatomen, einen aromataischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. 4,4'- und/oder 2,4'-Diphenylmethandiisocyanat ableiten;
b) die erfindungsgemäßen Polymerpolyole,
c) gegebenenfalls als Ausgangskomponenten Verbindungen mit mindestens 2 gegenüber Isocyanaten reaktionsfähigen Wasserstoffatomen mit einem Molekulargewicht von 40 bis 10 000 g/mol, vorzugsweise Polyetherpolyole,d.h. an sich bekannte Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine sowie die Starterverbindungen selbst;
d) erfindungsgemäß werden gegebenenfalls die in der Polyurethanchemie an sich üblichen Katalysatoren mitverwendet;
e) gegebenenfalls werden als Treibmittel Wasser und/oder niedrigsiedende Kohlenwasserstoffe mitverwendet, z.B. niedrigsiedende Alkane wie Pentan, Cycloalkane wie Cyclopentan, ferner Alkene sowie unter Druck in die Reaktionsmischung eingebracht Gase wie Kohlendioxid;
f1) gegebenenfalls werden Hilfs- und Zusatzmittel mitverwendet wie oberflächenaktive Zusatzstoffe wie Emulgatoren und Schaumstabilisatoren,
f2) Reaktionsverzögerer, Zellregler der an sich bekannten Art wie Paraffine, Fettalkohole oder Dimethylpolysiloxane sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen.

Beispiele von gegebenenfalls erfindungsgemäß mitzuverwendenden oberflächenaktiven Zusatzstoffen und Schaumstabilisatoren sowie Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der weichen Polyurethanschäume erfolgt in an sich bekannter Weise, wie z.B. im Kunststoff-Handbuch, Band VII, herausgegeben von G. Oertel, Carl Hanser Verlag, München, 1993, z.B. auf den Seiten 139 bis 263 beschrieben.

Die folgenden Beispiele sollen die Erfindung näher erläutern, ohne sie jedoch in ihrem Umfang zu begrenzen.

### Beispiele

### Ausgangsprodukte

- Polyol A:: Polypropylenoxid/ethylenoxidether der Molmasse 12 020 g/mol auf der Basis Sorbit
- Polyol B:: Polypropylenoxid/ethylenoxidether der Molmasse 6000 g/mol auf der Basis Trimethylolpropan
- Polyol C:: Polypropylenoxid/ethylenoxidether der Molmasse 3000 g/mol auf der Basis Glycerin

### Beispiel 1

Herstellung einer erfindungsgemäßen mit Rizinusöl modifizierten Hydroxyverbindung (Polyol D):
1000 g Polyol A, 60 g Rizinusöl und 1 g Dibutylzinndilaurat werden vermischt und 4 Stunden bei 240°C gerührt. Nach dem Abkühlen erhält man eine klare gelbe Flüssigkeit

### Beispiel 2

Herstellung einer erfindungsgemäßen mit Rizinusöl modifizierten Hydroxyverbindung (Polyol E):
900 g Polyol A, 108 g Rizinusöl und 1 g Dibutylzinndilaurat werden vermischt und 4 Stunden bei 240°C gerührt. Nach dem Abkühlen erhält man eine klare gelbe Flüssigkeit.

### Beispiel 3

Herstellung einer erfindungsgemäßen mit Rizinusöl modifizierten Hydroxyverbindung (Polyol F):
480 g Polyol B, 60 g Rizinusöl und 1 g Dibutylzinndilaurat werden vermischt und 4 Stunden bei 240°C gerührt. Nach dem Abkühlen erhält man eine klare gelbe Flüssigkeit.

### Beispiel 4

Herstellung einer erfindungsgemäßen mit Rizinusöl modifizierten Hydroxyverbindung mit einer durch zusätzliche Polykondensation erhöhten Molmasse (Polyol G):
900 g Polyol A, 108 g Rizinusöl, 40 g einer Dimerfettsäure (Pripol 1025 der Firma Unichema) und 1 g Dibutylzinndilaurat werden vermischt und 5 Stunden bei 240°C gerührt. Nach dem Abkühlen erhält man eine klare gelbe Flüssigkeit; berechnete Molmasse 9000 g/mol.

### Beispiel 5

Herstellung einer erfindungsgemäßen mit Rizinusöl modifizierten Hydroxyverbindung mit einer durch zusätzliche Polykondensation erhöhten Molmasse (Polyol H):
160 g Polyol A, 20 g Rizinusöl, 17 g einer Dimerfettsäure (Pripol 1025 der Firma Unichema) und 1 g Dibutylzinndilaurat werden vermischt und 5 Stunden bei 240°C gerührt. Nach dem Abkühlen erhält man eine hochviskose, orangefarbene, klare Flüssigkeit, berechnete Molmasse 30 000 g/mol.

### Beispiel 6

Herstellung eines Polymerpolyols entsprechend dem erfindungsgemäßen Verfahren:
Zu 162 g Polyol C, 54 g Polyol D und 25 g Isopropanol werden bei 125°C unter Rühren innerhalb von 2 Stunden 238 g Styrol, 158 g Acrylnitril und 4,5 g 2,2'-Azobis(2-methylbutyronitril) dosiert. Dann werden nach 10 weiteren Minuten 0,4 g 2,2'-Azobis(2-methylbutyronitril) in 19 g Isopropanol zur Vervollständigung des Umsatzes zugegeben. Nach einer Nachreaktionszeit von 1 Stunde werden Restmonomere, Reglerreste und Lösungsmittel durch Vakuumdestillation entfernt; das Produkt wird über ein Filtertuch mit einer Maschenweite von 100 µM filtriert. Das Produkt ist eine weiße, agglomeratfreie Dispersion mit einer Viskosität von 5000 mPas/25°C und einem Feststoffgehalt von 40 Gew.-%.

### Beispiele 7 bis 15

Beispiele 7 bis 15 zeigen die Herstellung von Polymerpolyolen nach dem erfindungsgemäßen Verfahren; Durchführung entsprechend Beispiel 6; Mengen in g;
Enolether: (Cyclohex-3-enylidenmethoxymethyl)benzol.

In Beispiel 7 bis 10 werden mit Rizinusöl modifizierte Polyether eingesetzt.

In Beispiel 11 bis 14 werden mit Rizinusöl modifizierte Polyether, deren Molmasse durch Zusatz einer mehrwertigen Carbonsäure erhöht wurde, eingesetzt.

In Beispiel 15 wurde eine Mischung von mit Rizinusöl modifizierten Polyethern unterschiedlicher Molmassen eingesetzt.

| | Beispiele | | | | | | | | |
|---|---|---|---|---|---|---|---|---|---|
| | 7 | 8 | 9 | 10 | 11 | 12 | 13 | 14 | 15 |
| Polyol C | 486 | 486 | 486 | 486 | 505 | 505 | 505 | 505 | 486 |
| Polyol E | 54 | 54 | 54 | 54 | | | | | |
| Polyol F | | | | | | | | | 44 |
| Polyol G | | | | | 35 | 35 | 35 | 35 | |
| Polyol H | | | | | | | | | 10 |
| Styrol | 216 | 216 | 216 | 216 | 216 | 216 | 216 | 216 | 216 |
| Acrylnitril | 144 | 144 | 144 | 144 | 144 | 144 | 144 | 144 | 144 |
| Toluol | | 135 | 120 | 135 | | 135 | 120 | 135 | |
| Isopropanol | 25 | | 25 | | 30 | | 25 | | 25 |
| Enolether | | | | 8 | | | | 8 | |
| Viskosität (mPas/25°C) | 4850 | 4010 | 3700 | 3500 | 5900 | 5500 | 3800 | 4000 | 5500 |

### Beispiele 16 bis 21

Verwendung der erfindungsgemäßen Polymerpolyole bei der Herstellung von Polyurethanschaumstoffen:
Beispiele 17, 18, 20, 21 zeigen die gute Eignung der erfindungsgemäß hergestellten Polymerpolyole zur Herstellung von Weichschäumen im Vergleich mit einem herkömmlichen Polymerpolyol (Beispiele 16 und 19).

Alle Komponenten - außer dem Polyisocyanat - werden miteinander intensiv vermischt. Danach wird das Polyisocyanat unter Rühren hinzugegeben und die Reaktionsmischung in eine offene Form gegossen, worin sie zum Weichschaum aufschäumt.

Verschäumungsbeispiele (Mengen in Gewichtsteilen)

| | Beispiele | | | | | |
|---|---|---|---|---|---|---|
| | 16 | 17 | 18 | 19 | 20 | 21 |
| Polyol I | 50 | 50 | 50 | 75 | 75 | 75 |
| Polymerpolyol (Standard) | 50 | - | - | 25 | - | - |
| Polymerpolyol (Beispiel 7) | - | 50 | - | - | 25 | - |
| Polymerpolyol (Beispiel 15) | - | - | 50 | - | - | 25 |
| Wasser | 4,5 | 4,5 | 4,5 | 4,5 | 4,5 | 4,5 |
| Stabilisator | 1,0 | 1,0 | 1,0 | 1,0 | 1,0 | 1,0 |
| Katalysator 1 | 0,15 | 0,15 | 0,15 | 0,15 | 0,15 | 0,15 |
| Katalysator 2 | 0,16 | 0,16 | 0,14 | 0,16 | 0,16 | 0,13 |
| Isocyanat | 52,4 | 53,5 | 53,5 | 53,5 | 54,0 | 54,0 |
| Kennzahl | 108 | 108 | 108 | 108 | 108 | 108 |
| Rohdichte (kg/m³) | 26 | 27 | 26 | 27 | 26,5 | 26,4 |
| Stauchhärte in kPa | 7,57 | 7,67 | 8,65 | 6,95 | 6,51 | 6,06 |
| Polyol I: Polypropylenoxid/ethylenoxidether der Molmasse 3700 g/mol auf der Basis Trimethylolpropan | | | | | | |
| Polymerpolyol (Standard): Handelsübliches Polymerpolyol, Bayer AG | | | | | | |
| Katalysator 1: Mischung aus Dimethylethanolamin und Bis,N,N-dimethylaminoethyl ether | | | | | | |
| Katalysator 2: Zinnoctoat | | | | | | |
| Stabilisator: Polyethersiloxan der Fa. Goldschmidt, Essen | | | | | | |
| Isocyanat: Toluylendiisocyanat (Desmodur® T80, Bayer AG) | | | | | | |

## Patentansprüche

1. Verfahren zur Herstellung stabiler niedrigviskoser Pfropfcopolymer-Dispersionen durch radikalische Polymerisation von olefinischen Monomeren mit Polyolen, dadurch gekennzeichnet, daß die Polymerisation in Gegenwart einer mit Rizinusöl modifizierten Hydroxyverbindung durchgeführt wird.

2. Verfahren gemäß Anspruch 1, dadurch gekennzeichnet, daß als olefinische Monomere Styrol und/oder Acrylnitril eingesetzt werden.

3. Verfahren gemäß Anspruch 1 oder 2, dadurch gekennzeichnet, daß als olefinische Monomere Mischungen aus Styrol und Acrylnitril im Gew.-Verhältnis von 20:80 bis 80:20, vorzugsweise von 25:75 bis 75:25, eingesetzt werden.

4. Verfahren gemäß Anspruch 1 bis 3, dadurch gekennzeichnet, daß als Polyol ein mindestens zwei Hydroxylgruppen aufweisendes Polyetherpolyol mit einer Funktionalität von 2,5 bis 6 und einer OH-Zahl von 20 bis 100 eingesetzt wird.

5. Verfahren gemäß Anspruch 1 bis 4, dadurch gekennzeichnet, daß mit Rizinusöl modifizierte Hydroxyverbindungen, welche Molmassen von 6000 bis 100 000 g/mol und eine Funktionalität von 2 bis 6 aufweisen, eingesetzt werden.

6. Verfahren gemäß Anspruch 5, dadurch gekennzeichnet, daß die modifizierten Hydroxyverbindungen Umsetzungsprodukte sind, bei deren Herstellung Rizinusöl und Hydroxyverbindungen im Molverhältnis von 1,1:1 bis 10:1, vorzugsweise 1,1:1 bis 3:1 vorgelegen haben.

7. Stabile, niedrigviskose Pfropfcopolymer-Dispersionen, erhältlich nach einem Verfahren gemäß Anspruch 1 bis 6.

8. Verfahren zur Herstellung von mit Rizinusöl modifizierten Hydroxyverbindungen durch Umsetzung von Rizinusöl mit Polyetherpolyolen in einem Molverhältnis von 0,1:1 bis 10:1.

9. Verfahren nach Anspruch 8, dadurch gekennzeichnet, daß das Molverhältnis Rizinusöl zu Polyetherpolyol 1,1:1 bis 10:1, vorzugsweise 1,1:1 bis 3:1, beträgt.

10. Verwendung der nach einem Verfahren gemäß Anspruch 1 bis 6 erhältlichen Pfropfcopolymer-Dispersionen als Polyolkomponente bei der Herstellung von Polyurethankunststoffen nach dem Isocyanat-Polyadditionsverfahren.

## Claims

1. A process for the preparation of stable, low-viscosity graft copolymer dispersions by the free-radical polymerization of olefinic monomers with polyols, characterized in that the polymerization is carried out in the presence of a hydroxyl compound modified with castor oil.

2. A process according to Claim 1, characterized in that the olefinic monomers used are styrene and/or acrylonitrile.

3. A process according to Claim 1 or 2, characterized in that the olefinic monomers used are mixtures of styrene and acrylonitrile in a weight ratio of 20:80 to 80:20, preferably of 25:75 to 75:25.

4. A process according to Claims 1 to 3, characterized in that the polyol used is a polyetherpolyol having at least two hydroxyl groups, a functionality of 2.5 to 6 and an OH number of 20 to 100.

5. A process according to Claims 1 to 4, characterized in that hydroxyl compounds modified with castor oil are used which have molecular weights of 6000 to 100,000 g/mol and a functionality of 2 to 6.

6. A process according to Claim 5, characterized in that the modified hydroxyl compounds are reaction products which have been prepared using castor oil and hydroxyl compounds in a molar ratio of 1.1:1 to 10:1, preferably 1.1:1 to 3:1.

7. Stable, low-viscosity graft copolymer dispersions obtainable by a process according to Claims 1 to 6.

8. A process for the preparation of hydroxyl compounds modified with castor oil by reacting castor oil with polyetherpolyols in a molar ratio of 0.1:1 to 10:1.

9. A process according to Claim 8, characterized in that the molar ratio of castor oil to polyetherpolyol is 1.1:1 to 10:1, preferably 1.1:1 to 3:1.

10. Use of the graft copolymer dispersion obtainable by a process according to Claims 1 to 6 as a polyol component in the manufacture of polyurethane plastics by the isocyanate polyaddition process.

## Revendications

1. Procédé de préparation de dispersions stables, à basse viscosité, de copolymères greffés par polymérisation radicalaire de monomères oléfiniques avec des polyols, caractérisé en ce que la polymérisation est réalisée en présence d'un composé hydroxylé modifié par l'huile de ricin.

2. Procédé selon la revendication 1, caractérisé en ce que les monomères oléfiniques utilisés sont le styrène et/ou l'acrylonitrile.

3. Procédé selon la revendication 1 ou 2, caractérisé en ce que l'on utilise en tant que monomères oléfiniques des mélanges de styrène et d'acrylonitrile dans des proportions relatives en poids de 20:80 à 80:20, de préférence de 25:75 à 75:25.

4. Procédé selon les revendications 1 à 3, caractérisé en ce que l'on utilise en tant que polyol un polyéther-polyol à au moins deux groupes hydroxy, ayant une fonctionnalité de 2,5 à 6 et un indice d'OH de 20 à 100.

5. Procédé selon les revendications 1 à 4, caractérisé en ce que l'on utilise des composés hydroxylés modifiés par l'huile de ricin et ayant des masses moléculaires de 6 000 à 100 000 g/mol et une fonctionnalité de 2 à 6.

6. Procédé selon la revendication 5, caractérisé en ce que les composés hydroxylés modifiés sont des produits de réaction à la préparation desquels on est parti de l'huile de ricin et des composés hydroxylés dans des proportions molaires de 1,1:1 à 10:1, de préférence de 1,1:1 à 3:1.

7. Dispersions stables, à basse viscosité, de copolymères greffés obtenues par un procédé selon les revendications 1 à 6.

8. Procédé de préparation de composés hydroxylés modifiés par l'huile de ricin, par réaction de l'huile de ricin avec des polyéther-polyols dans des proportions molaires de 0,1:1 à 10:1.

9. Procédé selon la revendication 8, caractérisé en ce que les proportions molaires entre l'huile de ricin et le polyéther-polyol sont de 1,1:1 à 10:1, de préférence de 1,1:1 à 3:1.

10. Utilisation des dispersions de copolymères greffés obtenues par un procédé selon les revendications 1 à 6, en tant que composants polyols à la préparation de résines synthétiques de polyuréthane par le procédé de polyaddition des isocyanates.
